# EUROPEAN PATENT APPLICATION

(11) **EP 2 251 951 A1**
(43) Date of publication of application: **17.11.2010**
(21) Application number: 09305431.0
(22) Date of filing: 14.05.2009
(51) Int. Cl.: H02G 15/04, H02G 15/18

(54) **Device, Assembly And Sealing Method Thereof**

(71) Applicant: Alcatel Lucent, 75008 Paris (FR)
(72) Inventor: Schumacher, Otto, 31157, Sarstedt (DE)
(74) Representative: Brose, Gerhard

(57) **Abstract**

The invention relates to a device (DEV1). The device (DEV1) comprises at least one opening (OP1_1). The device (DEV1) further comprises at least one groove (GR1_1) along an inner perimeter (INP1_1) of the at least one opening (OP1_1), wherein the device (DEV1) comprising a flexible material adopted for being everted in a region (REG1_1) of the at least one opening (OP1_1). The invention further relates to an assembly and to a method for sealing.

## Description

### FIELD OF THE INVENTION

The invention relates to a device according to the preamble of claim 1, to an assembly comprising a device according to the preamble, of claim 1, and to a method for sealing according to the preamble of claim 15,

### BACKGROUND OF THE INVENTION

During storage and transportation of elements such as cables for transporting RF signals, hoses for transporting gases or liquids, or pipes for transporting gases or liquids, it is often necessary, to seal ends of the cables, hoses or pipes hermetically against environmental influences like moisture and ingress of dust.

In addition, connectors mounted at the cables, hoses or pipes may require a sufficient sealing against environmental pollution or moisture. Furthermore, elements such as tanks, basins, bottles or other bins comprising a cavity and a filling hole often require a hermetical closing, if content of such elements such as solids, liquids, or gases must be protected against any pollution coming from the outside.

In the following, problems arising related to sealing of RF cables are described exemplarily in more detail.

RF cables such as coaxial cables are used for example in radio communication systems for connecting antennas or antenna systems to base stations. Usually a connection between a new antenna or a new antenna system and a new base station is established, when the new base station and the new antenna have been transported to its dedicated location and are going to be installed. Alternatively, an existing connection might be replaced between an already installed antenna and base station by a new connection, if the base station is upgraded for example by MIMO technology (MIMO = multiple input multiple output).

For sealing the cable ends for storage and transportation and prior to installation, two solutions are generally applied today. For usage as boots, either rubber caps with a slight smaller dimension than a cable diameter are pushed over the cable ends or caps are taken, that are made from heat shrinking material. Such a cap might also be filled with glue, which melts under heat application.

Rubber caps have a disadvantage, that a perfect sealing is not guaranteed especially if an outer cable jacket is rough or a cross-section of the outer cable jacket is not perfectly cylindric Cable types are known, that are made with ridges on the outer cable jacket. A rubber cap does not suitable seal the open cable ends of such a cable having the ridges on the outer jacket. Especially coaxial cables comprising hollow conductors with large air volume have a high probability of moisture ingress. Depending on temperature and outside atmospheric pressure, there could be a pressure difference to an inner cable volume, in case of an overpressure of the inner cable volume, the caps can be pushed from the open cable ends or in case of a negative pressure of the inner cable volume, moisture might be sucked into the cable through small gaps between the outer jacket cable and the cap.

The caps made from the heat shrinking material have the disadvantage, that a heat torch is required for installation. Besides the risk of cable damages due to applied heat, a heat shrinking process is not reliable, because it is required, that the heat has to be evenly distributed over the whole surface of the cap.

Caps with the glue on an inside partly overcome the problem of gaps especially in the case of non-cylindrical or non-uniform outer cable jackets, because the glue becomes liquid, when beat is applied and the glue fills the gaps between the outer cable jacket and the cap, To enable a sufficient adhesion of the glue on the outer cable jacket, a surface of the outer cable jacket needs to be cleaned and roughened beforehand.

Solutions with heat shrink caps are comparably expensive from material point of view and also from an installation time point of view. Besides this, a handing of the heat torch in an outside environment considering wind etc. is quite difficult.

Gaps between a cable end and a connector are sealed either by a simple rubber boot or by a self adhesive butyl tape, that needs to be covered with an additional UV-resistant PVC tape. Both solutions provide only a minimal degree of moisture protection, IP 67 classification for instance, and a sealing performance depends to a great extent on skills of an installer.

A seating of a junction of two cables both equipped with connectors is made either by toping with a self-adhesive butyl tape that is covered by a UV-resistant PVC tape, by a cold shrink tube or by a plastic housing, that is made with a gel type of sealing, All these solutions have disadvantages. They are very expensive (cold shrink tube, gel sealed plastic housing) or the sealing performance depends on the skills of the installer.

The way of sealing end pieces of elements such as cables, hoses, tubes etc. or the way of sealing closings of elements such as tanks, basins, bottles, or bins affects quality and reliability of the sealing.

Therefore, it is an object of the invention to improve the sealing of such end pieces of elements or of such closings of elements. If is a further object of the invention to simplify the sealing of such elements and it is an even further object of the invention to simplify the installation of elements such as cables, hoses, pipes etc.

### SUMMARY OF THE INVENTION

The object is achieved by a device comprising at least one opening, wherein the device further comprises at least one groove along on inner perimeter of the at least one opening and wherein the device comprises a flexible material, adapted for being everted in a region of the at least one opening. The device according to the present invention offers a first benefit of simplifying an everting of the region of the opening using the groove and the flexibility of the material. If the material would be not flexible enough, the everting of an inner surface of the region from inwards to outwards is impossible or only possible by damaging the device. A second benefit is based on the fact, that the groove defines the region, which can be everted. Therewith, the region can be everted in a reliable way.

The device may be a cap. This provides the advantage of using the device for seating open ends of elements such as cables, pipes or hoses, for sealing end pieces of elements such as cables, hoses or pipes to which connectors are mounted, or for sealing of filling holes of elements such as tanks or bottles being filled with a material such as a solid, a liquid, or a gas.

In a further embodiment of the invention, the device may comprise at least one further groove along a further inner perimeter of at least one further opening. This offers the benefits of simplifying the everting of a further region of the further opening of the device using the flexible material and the further groove and of defining the further region of the further opening by the further groove. The device can be used for sealing junctions of at least two cables, pipes or hoses. Furthermore, the device can be used for sealing more than one open end of cables, pipes or hoses or more than one end piece of an cable, a pipe or a hose, to which a connector is mounted.

In an even further embodiment of the invention, a diameter of the inner perimeter of the at least one opening is different to a further diameter of the further inner perimeter of the at least one further opening. Therewith, the device can be used for sealing junctions of at least two cables, pipes or hoses, wherein the at least two cables, two pipes, two hoses or the connectors having different cross sections.

The device may be a tube. This provides the advantage of using the device for sealing for example connections between two cables, two hoses, or two pipes.

In further preferred embodiments of the invention, a depth of the at least one groove and/or a thickness of a side wall of the at least one opening are adapted to the flexible material. This provides the advantages on the one hand of optimising an expenditure of energy for everting the region of the opening and on the other hand of maintaining a predefined level of stability of the region of the opening.

In an even further preferred embodiment of the invention, the device comprises a sealing material at the region of the at least one opening being everted from inwards to outwards. Thereby, the sealing material can be reliably applied with a distance in a predefined range to an inner edge of the opening.

A further advantage is based on a possibility to produce the device with the applied sealing material already at a factory of the device manufacturer. From this it follows, that the sealing can be executed in a shorter time using the device with the already applied sealing material.

The sealing material may be adhesive. This provides the benefit of fixing the sealing material so that the sealing material cannot slip or cannot dropped away. Furthermore, the adhesion of the sealing material on the inner surface of the region and on an outer surface of an end piece of an element such as a cable, a pipe, or a hose improves the sealing. The sealing material may be butyl. Using butyl for the sealing material provides the following beneficial properties: gas impermeability above a first predefined threshold, steady flexibility above a redefined time, water absorption below a second predefined threshold, non-reactive, no curing time, applicable immediately after mounting as a sealing material, a wide range of adjustable adhesion levels, a wide range of adjustable degrees of hardness, active oxygen resistance above a third predefined threshold.

In another embodiment of the invention, the device further comprises at least one further groove along the inner perimeter of the at least one opening and wherein the sealing material is located at the at least one further groove. Therewith, the at least one further groove of the at least one opening can be used for fixing the sealing material. This is especially advantageous, if the sealing material is non-adhesive. This allows for preventing of a potential shifting of the sealing material during a subsequent pushing step or a subsequent folding step The sealing material may be an o-ring. This provides the first advantage of fitting into the further groove of the opening and thereby sealing the gap between the device and the outer surface of the end piece of the element such as an RF cable with a predefined grade, The second advantage is based on the fact, that o-rings are a cheap bulk commodity.

The object of the invention is further achieved by an assembly comprising the device, the sealing material and at least one element, wherein the sealing material is located between the region of the at least one opening and the outer surface of the at least one element sealing an end piece of the at least one element.

Thos offers a benefit of improving the sealing quality of end pieces of elements such as end pieces of cables, pipes, or hoses or closings of tanks, bottles, or bins. Furthermore, a more reliable sealing especially for outdoor applications can be achieved.

In, yet another preferred embodiment of the invention, the assembly further comprises at least one further element and a junction of the at least one element and of the at least one further element and wherein the device and the sealing material seal the junction.

Compared to the taping solutions used for cable connections, the yet another preferred embodiment of the invention can reduce an installation time up to a factor of 10. In addition, the sealing quality is far less dependent on the skills of the installer.

The object of the invention is even further achieved by a method for sealing at least one end piece of an element by a device, the device comprising at least one groove along an inner perimeter of at least one opening, wherein the method comprising the steps of applying a sealing material to a region of the at least one opening being everted from inwards to outwards, pushing the device over the at least one end piece, and everting the region of the at least one opening from outwards to inwards.

The method provides the following advantages: reduction of the installation time, reduction of installation costs, more reliable sealing, and the sealing quality is above a predefined grade.

Further advantageous features of the invention are defined in the following detailed description of the invention.

### BRIEF DESCRIPTION OF THE DRAWINGS

The embodiments of the invention will become apparent in the following detailed description and will be illustrated by accompanying drawings given by way of non-limiting illustrations.
Figure 1 shows a cross section of a device in accordance to a first embodiment of the invention.
Figure 2 shows a cross section of the device comprising a sealing material in accordance to an application of the first embodiment of the invention.
Figure 3 shows a cross section of a device in accordance to a second embodiment of the invention.
Figure 4 shows a cross section of the device comprising a sealing material in accordance to an application of the second embodiment of the invention.
Figure 5 shows a cross section of a device in accordance to a third embodiment of the invention.
Figure 6 shows a cross section of a device in accordance to a fourth embodiment of the invention.
Figure 7 shows a cross section of an assembly in accordance to a fifth embodiment of the invention.
Figure 8 shows a cross section of an assembly in accordance to a sixth embodiment of the invention.
Figure 9 shows a flow diagram of a method in accordance to an application of the embodiments of the invention.
Figure 10 shows a flow diagram of a further method in accordance to an application of the embodiments of the invention.
Figure 11 shows a flow diagram of an even further method in accordance to the embodiments of the invention.

### DETAILED DESCRIPTION OF THE INVENTION

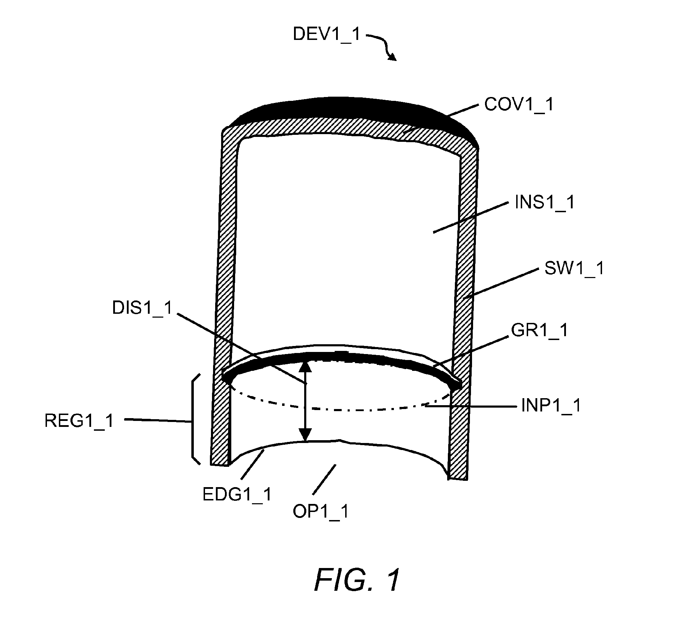

Figure 1 shows a cross section of a device DEV1_1 according to a first embodiment of the invention.

The device DEV1_1 comprises a cover COV1_1 and a hollow part with a side wait SW1_1 enclosing an opening OP1_1. The cover GOV1_1 hermetically terminates one side of the hollow part opposite to the opening OP1_1.

The hollow part may be preferably a hollow cylinder. In further alternative, the hollow part may be a hollow cube, a hollow cuboid, or another hollow geometrical form. That means, that an inner perimeter INR1_1 of the opening OP1_1 maybe circular, elliptical, quadratic, rectangular, or may have another geometrical form.

The side wall SW1_1 may be perpendicular to a plane of the opening OP1_1. In an alternative, the side wall SW1_1 may be inclined to the plane of the opening OP1_1.

The device DEV1_1 may be a cap, a top, a nipple or another object with a first opening OP1_1 typically used for sealing of outlets, exits, end faces of cables, hoses, or pipes etc.

The device DEV1_1 comprises a flexible material adapted for being everted in a region REG1_1 of the opening OP1_1. The flexible material may be rubber or silicon. In principle, all flexible materials may be used, which resist a material degradation under harsh environmental conditions. The device DEV1_1 further comprises a first groove GR1_1 at an inner surface INS1_1 of the device DEV1_1 along the inner perimeter INP1_1 of the first opening OP1_1.

The first groove, GP1_1 delimits the region REG1_1.

Preferably, an initial point and an endpoint of the first groove GR1_1 are at a some place and a longitudinal direction of the first groove GR1_1 is characterized by a closed circle, a closed ellipse, a closed quadrate, a dosed rectangle or another by another geometric form dependent on a geometric form of the hollow part of the device DEV1_1.

In an alternative, the first groove GR1_1 is only along a first part of the inner perimeter INF1_1,

In a further alternative, the first groove GR1_1 is only along the first part of the inner perimeter INP1_1 and further first grooves are along further parts of the inner perimeter INP1_1 providing a periodical discontinued overall groove along the inner perimeter INP1_1.

In an even further alternative, the first groove GR1_1 may comprise a zigzag-pattern or another pattern.

A cross section of the first groove GR1_1 may be semicircular, quadratic, rectangular, or trapezoidal.

A depth of the first groove GR1_1 may be adapted to the flexible material of the device DEV1_1.

A first distance DIS1_1 of the first groove GR1_1 to a first inner edge EDG1_1 of the first opening OP1_1 may be adapted to a width of a sealing material. In a further alternative, the first distance DIS1_1 may be adapted to the flexible material of the device OEV1_1.

A thickness of the side wall SW1_1 of the opening OP1_1 may be preferably adapted to the flexible material of the device DEV1_1. A geometric form of the device DEV1_1 comprising the opening OP1_1 and the first groove GR1_1 may be preferably manufactured by injection molding of another molding process. In an alternative, the first groove GR1_1 is not manufactured during the molding process but afterwards by milling.

The side wall SW1_1 and the cover COV1_1 of the device DEV1_1 are preferably composed of one work piece. In an alternative, the cover COV1_1 is made up of a nonelaslic material such as stainless steel and the side wall sw1_1 of the opening O1_1 is made up of the flexible material.

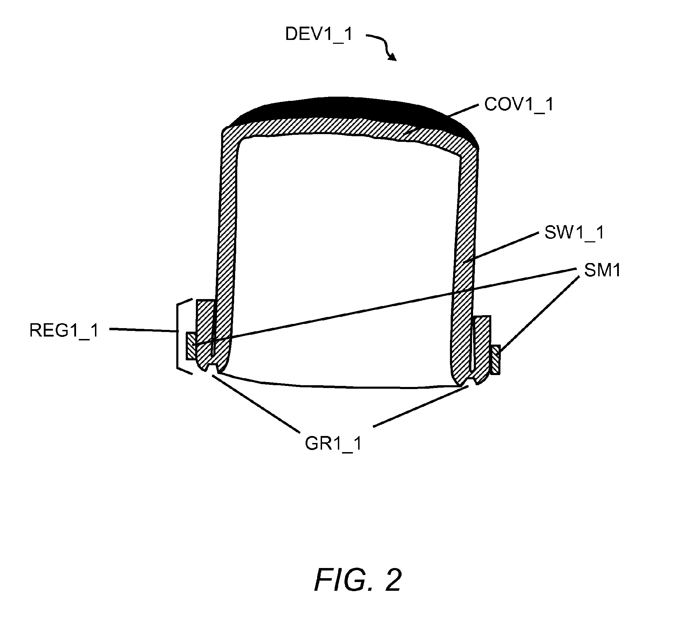

Figure 2 shows a cross section of the device DEV1_1 comprising a first sealing material SM1 ot the region REG1_1 of the opening OF1_1 in accordance to an application of the first embodiment of the invention.

The elements in Figure 2 that correspond to elements of Figure 1 have been designated by some reference numerals.

The region REG1_1 is everted from inwards to outwards, so that a first part of the side wall SW1 being an integral part of the region REG1_1 is turned by about 180 degree of are and a part of the inner surface INS1_1 being an integral part of the region REG1_1 is directed to an outside of the device DEV1_1. The first groove GR1_1 is preferably located in a fold of the everted region REG1_1 and of a second part of the side wall SW1_1 not being everted.

The first sealing material SM1 is applied to the part of the inner surface INS1_1 of the region REG1 _1, which is directed to the outside of the device DEV1_1.

The first sealing material SM1 is preferably applied to the part of the inner surface INS1_1 of the region REG1_1 close to the first groove GR1_1 Preferably, the first sealing material SM1 may have a geometrical form such as a banded and overlapping strip.

The first sealing material SM1 preferably annular encloses the everted region REG1_1.

The first seating material SM1 may be preferably a flexible and adhesive material such as butyl.

In a further alternative, the first sealing material SM1 may be a semifluid material such as grease,

In an even further alternative, the first sealing material SM1 may have a rotationally symmetric form such as an o-ring.

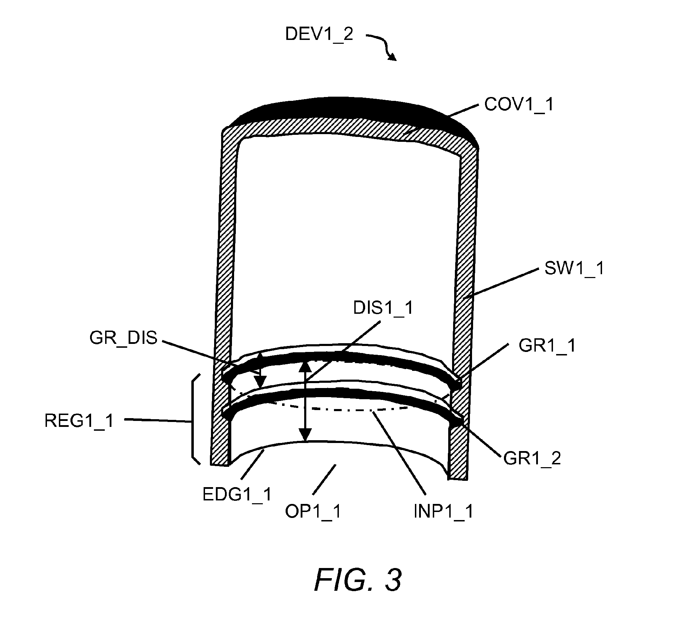

Figure 3 shows a cross section of a device DEV1_2 according to a second embodiment of the invention.

The elements in Figure 3 that correspond to elements of Figure 1 have been designated by same reference numerals.

In comparison to the device DEV1_1 of Figure 1, the device DEV1_2 further comprises a second groove GR1_2 along the inner perimeter INP1_1 of the region REG1_1 of the opening OP1_1. The device DEV1_2 may comprise more than two grooves along the inner perimeter INP1_1 of the region REG1_1 of the opening OP1_1.

The second groove GR1_2 is located with a predefined distance GR_DIS from the first groove GR1_1 between the first groove GR1_1 and the first inner edge EDG1_1 of the first opening OP1_1. The predefined distance GR_DIS may be adapted to a width of a sealing material.

A cross section of the second groove GR1_2 may be adapted to a cross section of a sealing material.

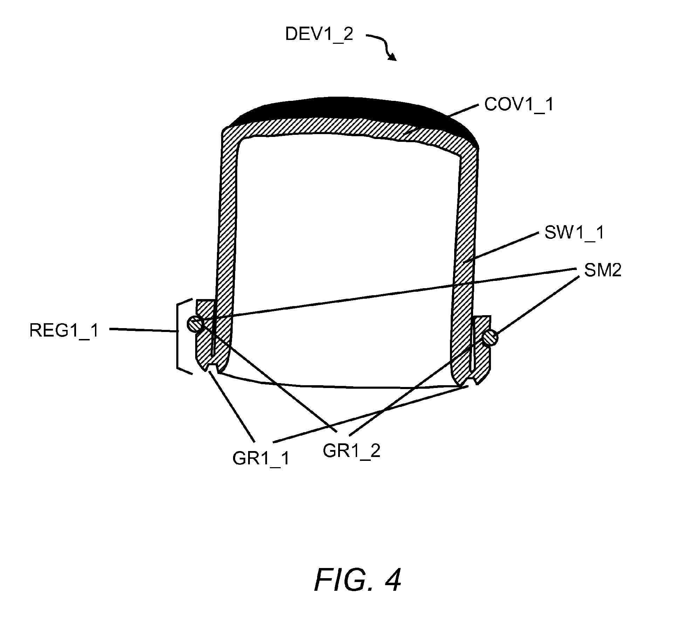

Figure 4 shows a cross section of the device DEV1_2 comprising a second seating material SM2 at the region REG1_1 of the opening OP1_1 in accordance to an application of the second embodiment of the invention.

The elements in Figure 4 that correspond to elements of Figure 1 and Figure 3 have been designated by same reference numerals.

The region REG1_1 is everted from inwards to outwards, so that a first part of the side wall SW1 being an integral part of the region REG1_1 is turned by about 180 degree of arc and a part of the inner surface INS1_1 being an integral part of the region REG1_1 is directed to an outside of the device DEV1_2. The first groove GR1_1 is preferably located in a fold of the everted region REG1_1 and of a second part of the side wall SW1_1 not being everted.

The second sealing material SM2 is located at the second groove GR1_2, preferably has a cross section adapted to a cross section of the second groove GR1_2, and preferably fills in the second groove GR1_2.

The second sealing material SM2 preferably annular encloses the everted region REG1_1.

The second sealing material SM2 may be a flexible, non-adhesive material such as rubber or silicon.

Preferably, the second sealing material SM2 may have a rotationally symmetric form such as an o-ring.

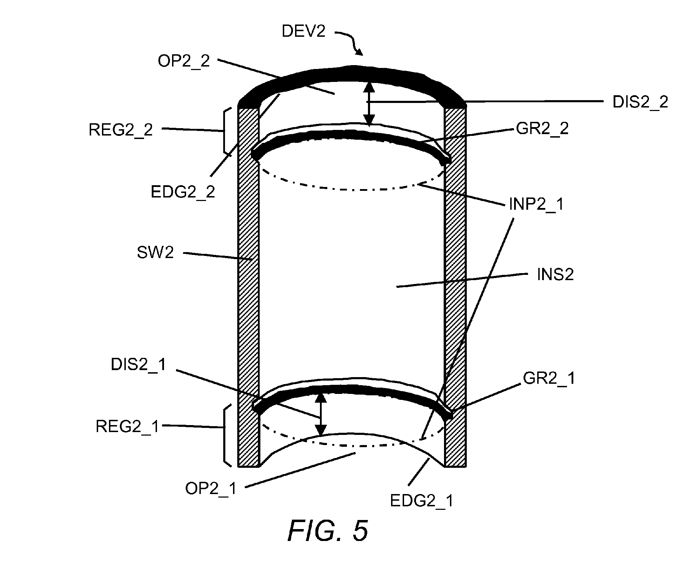

Figure 5 shows a cross section of a device DEV2 according to a third embodiment of the invention,

The device DEV2 comprises a hollow cylinder with a side wall SW2 and a first and a second opening OP2_1, OP2_2.

In an alternative, the device DEV2 may comprise a hollow cube, a hollow cuboid, or another hollow geometrical form with the first and the second opening OP2_1, OP2_2.

In a further alternative, the device DEV2 may comprise more than two openings.

In an even further alternative, the first and the second opening OP2_1, OP2_2 of the device DEV2 are arranged in a single-line or multiline array and the first and the second opening OP2_1, OP2_2 have no hollow connection within the device DEV2.

The device DEV2 further comprises a first groove GR2_1 at an inner surface INS2 of the device DEV2 along a first inner perimeter INP2_1 of the first opening OP2_1 and a second groove GR2_2 at the inner surface INS2 of the device DEV2 along the first inner perimeter INP2_1, of the second opening OP2_2.

The first groove GR2_1 delimits the first region PEG2_1 and the second groove GR2_2 delimits the second region REG2_2.

In an alternative, the device. DEV2 may comprise more than one groove along the inner perimeters INP2_1 of the first and the second opening OP2_1, OP2_2.

In a further alternative, the device DEV2 may comprise further grooves along inner perimeters of further openings.

The device DEV2 may be a tube, a pipe, a duct or another object with the first and the second opening OP2_1,OP2_2.

The device DEV2 comprises a flexible material such as rubber or silicon adapted for being everted in the first region REG2_1 of the first opening OP2_1 and in the second region REG2_2 of the second opening OP2_2. A depth of the first and the second groove GR2_1, GR2_2 may be adapted to the flexible material of the device DEV2.

A first distance DIS2_1 of the first groove GR2_1 to a first inner edge EDG2_1 of the first opening OP2_1 and a second distance DIS2_1 of the second groove GR2_2 to a second inner edge EDG2_2 of the second opening OP2_2 may be adapted to a width of a sealing material, In an alternative, the first and the second distance DIS2_1, DIS2_2 may be adapted to he flexible material of the device DEV2. In a further alternative, the first and the second distance DIS2_1, DIS2_2 may be adapted to geometric forms of connectors of a junction such as a junction of RF cables to be covered and sealed by the device DEV2.

Preferably, a thickness of a side wall SW2 of the first and the second opening OP2_1, OP2_2 of the device DEV2 may be adapted to the, flexible material of the device DEV2.

A geometric form of the device DEV2 may be preferably manufactured by injection molding of another molding process, In an alternative, the first and the second groove GR2_1, GR2_2 are not manufactured during the molding process but afterwards by milling.

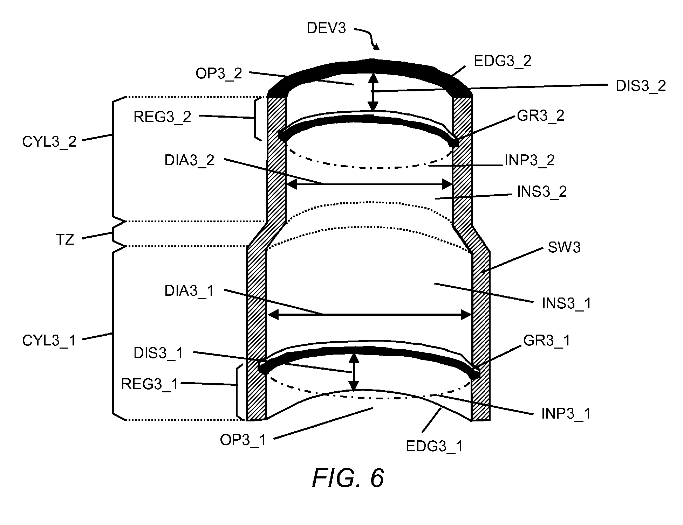

Figure 6 shows a cross section of a device DEV3 according to a fourth embodiment of the invention.

In comparison to the device DEV2 of Figure 5, a first inner diameter DIA3_1 of a first inner perimeter INP3_1 of a first opening OP3_1 of the device DEV3 is different to a second inner diameter DIA3_2 of a second inner perimeter INP3_2 of a second opening OP3_2 of the device DEV3.

The device DEV3 comprises a first hollow cylinder CYL3_1 with the first inner diameter DIA3_1 and a second hollow cylinder CYL3_2 with the second inner diameter DIA3_2. A transition zone TZ interconnects the first and the second hollow cylinder CYL3_1, CYL3_2 with an enclosing sloping side wall.

In an alternative, the device DEV3 may comprise two hollow cubes, two hollow cuboids, or two other hollow geometrical forms with the first and the second opening OP3_1, OP3_2.

The first inner diameter DIA3_1 may be adapted to a geometric form of a first connector of a junction and the second inner diameter DIA3_2 may be adopted to a second geometric form of a second connector of the junction such as an RF cable junction.

In an alternative, the first inner diameter DIA3_1 may be adapted to a first outer diameter of a first element such as a first RF cable and the second inner diameter DIA3_2 may be adopted to a second outer diameter of a second element such as a second RF cable.

The device DEV3 further comprises a first groove GR3_1 at a first inner surface INS3_1 of the device DEV3 along the first inner perimeter INP3_1 of the first opening OP3_1 and a second groove GR3 2 at the second inner surface INS3_2 of the device DEV3 along the first inner perimeter INP3_1 of the second opening OP3_2.

The first groove GR3_1 delimits a first region REG3_1 and the second groove GR3_2 delimits the second region REG3_2.

A first distance DIS3_1 between the first groove GR3_1 and a first inner edge EDG3_1 of the first opening OP3_1 may be adapted to a first geometric form of a first connector of a junction and a second distance DIS3_2 between the second groove GR3 2 and a second inner edge EDG3_3 of the second opening OP3_2 may be adapted to a second geometric form of a second connector of the junction such as an RF cable junction.

The device DEV3 comprises a flexible material adapted for being everted in regions REG3_1, REG3_2 of the first and the second opening OP3_1, OP3_2.

Preferably, a thickness of a side wall SW3 of the first and the second opening OP3_1, OP3_2 of the device DEV3 may be adapted to the flexible material of the device DEV3.

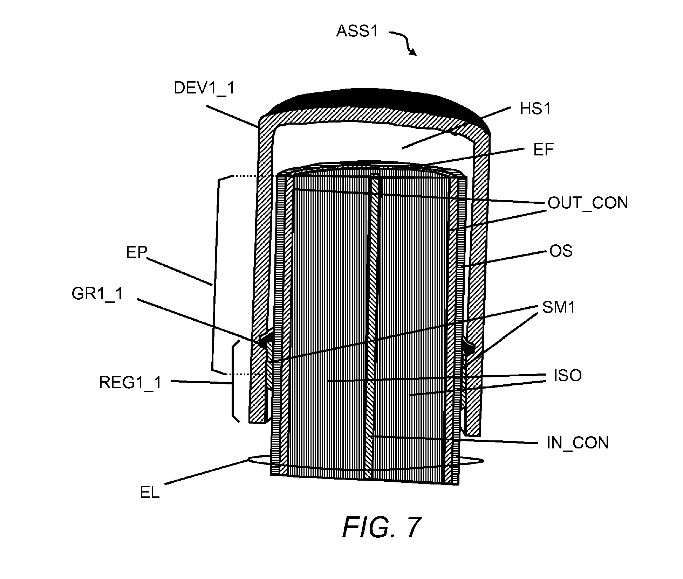

Figure 7 shows a cross section of an assembly ASS1 in accordance to a fifth embodiment of the invention.

The assembly ASS1 comprises the device DEV1_1 according to the first embodiment of the the first sealing material SM1, and an element EL.

The device DEV1_1 is pushed over an end piece EP of the element EL and covers and seals the end piece EP.

In on alternative, the assembly ASS1 may comprise the device DEV1_2 according to the second embodiment of the invention.

In a further alternative, the assembly ASS1 may comprise the second sealing material SM2.

The element EL may be an RF cable such as a coaxial cable with an inner conductor IN_CON, a cylindrical outer conductor OUT_CON, an isolating material ISO between the inner and the cylindrical outer conductor OUT_CON, and an outer surface OS provided by a cable jacket. In an alternative, the element EL may be a flexible hose such as used for transporting gases or liquids.

In a further alternative, the element EL may be a steel pipe such as used for transporting gases or liquids,

In an even further alternative, instead of a single element at least two elements such as an RF connector mounted on on RF cable end are covered and sealed by using the device DEV1_1

In yet another alternative, the element EL may be a bin such as a tank, a basin, or a bottle comprising a cavity and a filling hole and the element EL is filled with a material such as a solid, a liquid, or a gas and the device DEV1_1 may be used as a closing to seal the filling hole. The first sealing material SM1 is preferably located between an inner surface of the region REG1_1 and an outer surface of the element EL and seals the end piece EP of the element EL. Thereby, especially an end face EF of the element EL such as an RF coaxial cable is sealed.

A hollow space HS1 within the device DEV1_1 is hermetically sealed against environmental influences such as moisture or dust.

The first sealing material SM1 is preferably located close to the first groove GR1_1 of the device DEV1_1.

In an alternative, the first sealing material SM1 may fill in the first groove GR1_1.

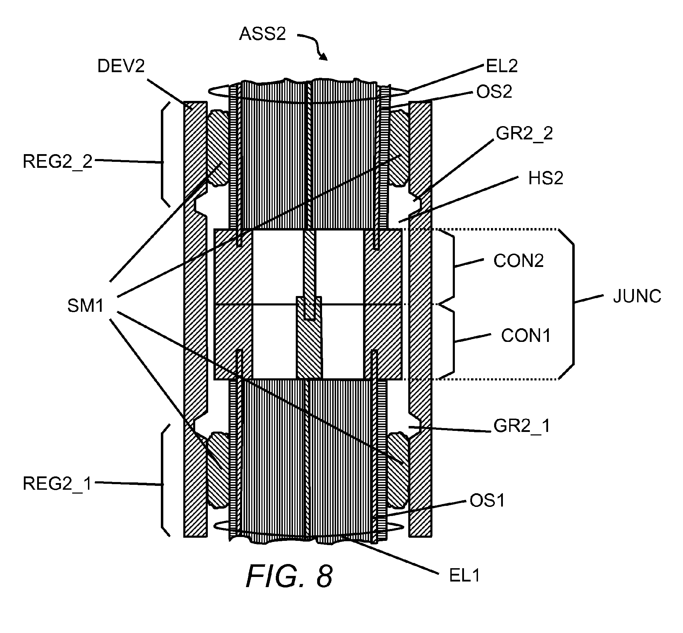

Figure 8 shows a cross section of an assembly ASS2 in accordance to a sixth embodiment of the invention.

The assembly ASS2 comprises the device DEV2 according to the third embodiment of the invention, the first sealing material SM1, a first element EL1, a second element EL2, end a junction JUNC of the first and the second element EL1, EL2.

The elements EL1, EL2 may be RF cables.

In further alternatives, the elements EL1, EL2 may be flexible hoses, steel pipes or other elements which require a sealed junction.

In an even further alternative, the assembly ASS2 may comprise the device DEV3 according to the fourth embodiment of the invention.

In a yet further alternative, the assembly ASS2 may comprise the second sealing material SM2 instead of the first sealing material SM1 or may comprise the first and the second sealing material SM1, SM2. The device DEV2 and the sealing material seal the junction JUNC of the first and the second element EL1, EL2.

The junction JUNC of the first and the second element EL1, EL2 comprises a first connector CON1 being mounted at the first element EL1 and a second connector CON2 being mounted at the second element EL2.

The connectors CON1, CON2 may be coaxial connectors adapted for RF coaxial cables. In further alternatives the connectors CON1, CON2 may be connectors for connecting hoses or pipes.

Alternatively, the junction JUNC of the first and the second element EL1, EL2 may comprise a single connector being mounted at the first and the second element EL1, EL2.

In an even further alternative, the junction JUNC may comprise a connection of more than two elements.

The first sealing material SM1. is preferably located between an inner surface of the regions REG2_1, REG2_2 of the first and second opening OP2_1, OP2_2 and outer surfaces OS1, OS2 of the first and the second element EL1, EL2.

Thereby, a hollow space HS2 within the device DEV2 comprising the junction of the first and the second element EL1, EL2 is hermetically sealed against environmental influences such as moisture or dust. The first sealing material SM1 is preferably located close to the first and the second groove GR2_1, GR2_2 of the device DEV2.

In an alternative, the first sealing material SM1 may fill in the first and the second groove GR2_1, GR2_2.

A hollow space HS2 within the device DEV2 is hermetically sealed against environmental influences such as moisture or dust.

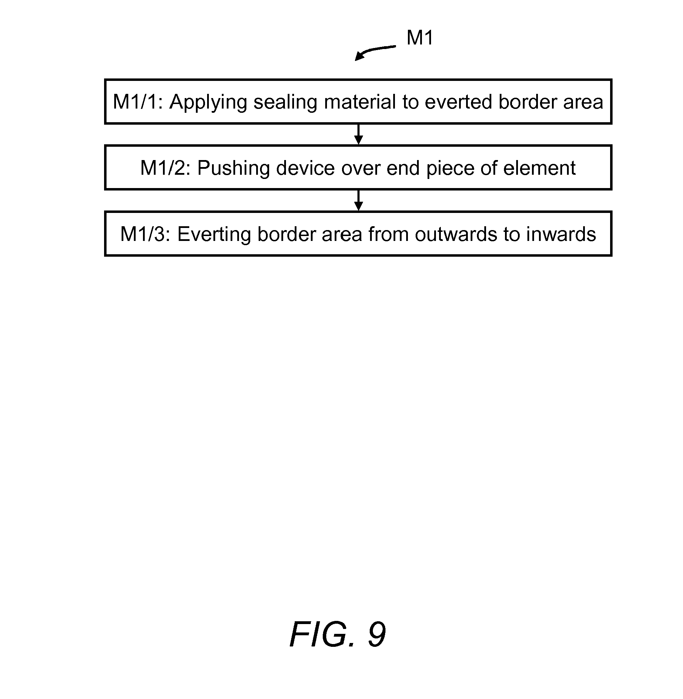

Referring to Figure 9 a flow diagram of a first method M1 in accordance to the embodiments of the invention is shown.

The sequence and the number of the steps for performing the first method M1 is not critical and as can be understood by those skilled in the art, that the sequence and the number of the steps may vary without departing from the scope of the invention.

The first method M1 according to Figure 7 is described for making the assembly ASS1. For a person skilled in the art, if is obvious that the first method M1 can be also applied for making the assembly ASS2 according to Figure 8 or alternative assemblies given in the detailed description.

In a first step M1/1, the first sealing material SM1 is applied to the region REG1_1 of the opening OP1_1 of the device CEV1.

The region REG1_1 may be already everted from inwards to outwards by casting or injection molding by using an adapted molding form.

In an alternative, the region REG1_1 may be everted after the casting or injection molding by a machine or by a human.

The first sealing material SM1 is preferably applied close to the first groove GR1_1.

In an alternative, the first sealing material SM1 may be filled into the first groove GR1_1.

In a next step M1/2 the device DEV1_1 is pushed over the end piece EP of the element EL.

The end piece EP of the element EL may be purged prior to the pushing step M1/2.

In a further step M1/3, the region REG1_1 of the opening OP1_1 is everted from outwards to inwards in a direction of the element EL. Thereby, the flexible material of the device DEV1_1 squeezes the sealing material SM1 into potential gaps between the outer surface of the element EL and the inner surface INS1 of the DEV1_1 and hermetically seals the end piece EP of the element EL against environmental influences such as moisture or dust.

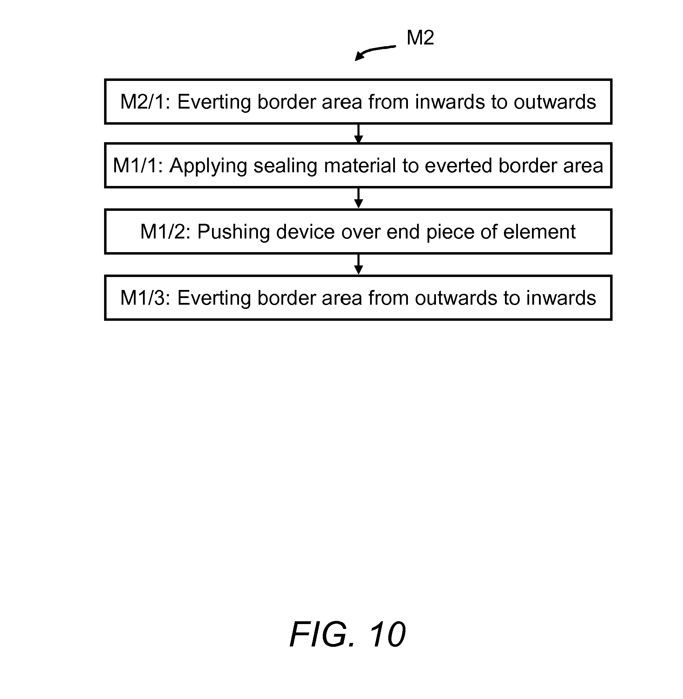

Referring to Figure 10 a flow diagram of a second method M2 in accordance to the embodiments of the invention is shown, The elements shown in Figure 10 that correspond to elements of the Figure 9 have been designated by the same reference numerals, in addition to the steps M1/1, M1/2, and M1/3 step M2/1 is performed prior to the step M1/1.

The sequence and the number of the steps for performing the second method M2 is not critical, and as can be understood by those skilled in the art, that the sequence and the number of the steps may vary without departing from the scope of the invention. In the further step M2/1, the region REG1_1 of the device DEV1_1 may be everted from inwards to outwards.

The everting step M2/1 may be done automatically by a machine. In an alternative, the everting step M2/1 may be done by a human, performing the sea ling for storage, transport or installation of the element EL.

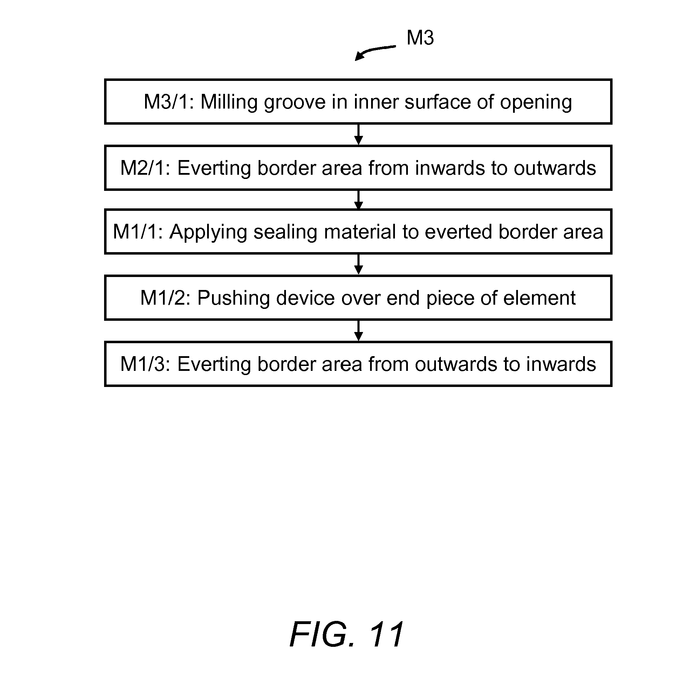

Referring to Figure 11 a flow diagram of a third method M3 in accordance to the embodiments of the invention is shown. The elements shown in Figure 11 that correspond to elements of the Figure 10 have been designated by the same reference numerals. In addition to the steps M2/1, M1/1, M1/1, and M1/3, step M3/1 is performed prior to the step M2/1. The sequence and the number of the steps for performing the third method M3 is not critical, and as can be understood by those skilled in the art, that the sequence and the number of the steps may vary without departing from the scope of the invention.

In the further step M3/1, the first groove GR1_1 may be milled into the inner surface INS1 of the device DEV1_1.

The milling step M3/1 may be performed already after manufacturing the device DEV1_1.

In on alternative, the milling step M3/1 may be performed immediately prior to the step M2/1.

In a further alternative, the milling step M3/1 may be performed immediately prior to the sealing for storage, transport or installation of the element EL.

## Claims

1. A device (DEV1_1, DEV1_2, DEV2, DEV3), said device (DEV1_1, DEV1_2, DEV2, DEV3) comprises at least one opening (OP1_1, OP2_1, OP2_2, OP3_1, OP3_2), said device (DEV1_1, DEV1_2, DEV2, DEV3) further comprises at least one groove (GR1_1, GR2_1, GR2_2, GR3_1, GR3_2) along an inner perimeter (INP1_1, INP2_1, INP3_1, INP3_2) of said at least one opening (OP1_1, OP2_1, OP2_2, OP3_1, OP3_2), **characterized in that** said device (DEV1_1, DEV1_2, DEV2, DEV3) comprising a flexible material adapted for being everted in a region (REG1_1, REG2_1, REG2_2, REG3_1, REG3_2) of said at least one opening (OP1_1, OP2_1, OP2_2, OP3_1, OP3_2),

2. Device (DEV1_1, DEV1_2) according to claim 1, wherein said device (DEV1_1, DEV1_2) is a cap.

3. Device (DEV2, DEV3) according to claim 1, wherein said device (DEV2, DEV3) comprises at least one further groove (GR2_2, GR3_2) along a further inner perimeter (INP2_1, INP3_2) of at least one further opening (OP2_2, OP3_2).

4. Device (DEV3) according to claim 3, wherein a diameter of said inner perimeter (INP3_1) of said at least one opening (OP3_1) is different to a further diameter of said further inner perimeter (INP3_2) of said at least one further opening (OP3_2).

5. Device (DEV2, DEV3) according to claim 3, wherein said device (DEV2, DEV3) is a tube.

6. Device (DEV1 _1, DEV1_2, DEV2, DEV3) according to claim 1, wherein a depth of said at least one groove (GR1_1, GR2_1, GR2_2, GR3_1, GR3_2) is adapted to said flexible material.

7. Device (DEV1_1, DEV1_2, DEV2, DEV3) according to claim 1, wherein a thickness of a side wall (SW1, SW2, SW3) of said at least one opening (OP1_1, OP2_1, OP2_2, OP3_1, OP3_2) is adapted to said flexible material.

8. Device (DEV1_1, DEV1_2, DEV2, DEV3) according to claim 1, wherein said device (DEV1_1, DEV1_2, DEV2, DEV3) comprises a sealing material (SM1, SM2) at said region (REG1_1, REG2_1, REG2_2, REG3_1, REG3_2) of said at least one opening (OP1_1, OP2_1, OP2_2, OP3_1, OP3_2) being everted from inwards to outwards.

9. Device (DEV1_1, DEV1_2, DEV2, DEV3) according to claim 8, wherein said sealing material (SM1, SM2) is adhesive.

10. Device (DEV1_1, DEV1_2, DEV2, DEV3) according to claim 8, wherein said sealing material (SM1, SM2) is butyl.

11. Device (DEV1_2) according to claim 8 wherein said device (DEV1_2) further comprises at least one further groove (GR1_2) along said inner perimeter (INP1_1) of said of least one opening (OP1_1) and wherein said sealing material (SM1, SM2) is located at said at least one further groove (GR1_2).

12. Device (DEV1_2) according to claim 11, wherein said sealing material
(SM1, SM2) is an o-ring.

13. An assembly (ASS1, ASS2) comprising a device (DEV1_1, DEV1_2,
DEV2, DEV3) according fo claim 1, a sealing material (SM1, SM2) and at least one element (EL, EL1, EL2), wherein said sealing material (SM1, SM2) is located between said region (REG1_1, REG2_1, REG2_2, REG3_1, REG3_2) of said at least one opening (OP1_1, OP2_1, OP2_2, OP3_1, OP3_2) and an outer surface (OS, OS1, OS2) of said at least one element (EL, EL1, EL2) sealing an end piece (EP, EP1, EP2) of said at least one element (EL, EL1, EL2).

14. Assembly (ASS2) according to claim 13 wherein said assembly (ASS2)
further comprises at least one further element (EL2) and a junction (JUNC) of said at least one element (EL1) and at said at least one further element (EL2) and wherein said device (DEV2, DEV3) and said sealing material (SM1, SM2) seal said junction (JUNC).

15. A method (M1, M2, M3) for sealing at least one end piece (EP, EP1, EP2)
of an element (EL, EL1, EL2) by a device (DEV1_1, DEV1_2, DEV2, DEV3), said device (DEV1_1, DEV1_2, DEV2, DEV3) comprising of least one groove (GR1_1, GR2_1, GR2_2, GR3_1, GR3_2) along an inner perimeter (MP1_1, INP2_1, INP3_1, IPN3_2) of at least one opening (OP1, OP2_1, OP2_2, OP3_1, OP3_2),
**characterized in that** said method (M1, M2, M3) comprising the steps of:
- applying a sealing material (SM1, SM2) to a region (REG1_1, REG2_1, REG2_2, REG3_1, REG3_2) of said at least one opening (OP1_1, OP2_1, OP2_2, OP3_1, OP3_2) being everted from inwards to outwards,
- pushing said device (DEV1_1, DEV1_2, DEV2, DEV3) over said at least one end piece (EP, EP1, EP2), and
- evening said region (REG1_1, REG2_1, REG2_2, REG3_1, REG3_2) of said at least one opening (OP1_1, OP2_1, OP2_2, OP3_1, OP3_2) from outwards to inwards.
